# EUROPÄISCHE PATENTSCHRIFT

(11) **EP 3 184 907 B1**
(45) Veröffentlichungstag und Bekanntmachung des Hinweises auf die Patenterteilung: **26.08.2026**
(21) Anmeldenummer: 16200628.2
(22) Anmeldetag: 25.11.2016
(51) Int. Cl.: F24C 7/08, G06F 3/01

(54) **HAUSHALTSGERÄT MIT EINER HAUSHALTSGERÄTEVORRICHTUNG**
HOUSEHOLD APPLIANCE WITH A HOUSEHOLD APPLIANCE DEVICE
APPAREIL ÉLECTROMÉNAGER AVEC UN DISPOSITIF D'APPAREIL ÉLECTROMÉNAGER

(30) Priorität: 22.12.2015 ES 201531873
(43) Veröffentlichungstag der Anmeldung: 28.06.2017
(73) Patentinhaber: BSH Hausgeräte GmbH, 81739 München (DE)
(72) Erfinder: Inogés Blasco, Alejandro, 50003 Zaragoza (ES); Llorente Gil, Sergio, 50009 Zaragoza (ES); Lopez Nicolas, Gonzalo, 50001 Zaragoza (ES); Montijano Muñoz, Eduardo, 50005 Zaragoza (ES); Palacios Gasós, Jose Manuel, 50018 Zaragoza (ES); Sagües Blázquiz, Carlos, 50018 Zaragoza (ES)

(56) Entgegenhaltungen:
- EP-A1- 2 615 376
- DE-A1- 102014 007 173
- DE-A1- 102014 011 771
- DE-A1- 102014 208 407
- DE-U1- 202014 101 897
- GB-A- 2 525 398

## Beschreibung

Die Erfindung betrifft eine Haushaltsgerätevorrichtung nach dem Oberbegriff des Patentanspruchs 1.

Aus der deutschen Offenlegungsschrift DE 2012 216 936 A1 ist bereits eine als Kochfeldvorrichtung ausgebildete Haushaltsgerätevorrichtung bekannt, in welcher verschiedene Bediengesten vorgeschlagen werden. Zu einer Auswahl einer Heizzone wird eine Bediengeste in Form einer Bewegung eines Körperteils eines Bedieners in Richtung derjenigen Heizzone vorgeschlagen, welche der Bediener auswählen will. Eine weitere vorgeschlagene Bediengeste dient zu einer Änderung einer Heizleistung und ist als eine kreisende Bewegung des Körperteils ausgebildet.

Aus der bislang noch nicht veröffentlichten europäischen Patentanmeldung mit der Anmeldenummer EP 15 18 48 70.2 ist eine Haushaltsgerätevorrichtung mit einer Sensoreinheit bekannt, welche in einer Einbaulage unterhalb einer Kochfeldplatte angeordnet ist und in einem Betriebszustand eine Bediengeste eines Bedieners detektiert. Eine Steuereinheit führt in dem Betriebszustand auf Basis der durch die Sensoreinheit detektierten Bediengeste eine Aktion aus oder leitet eine Aktion ein.

Die folgende Dokumente des Stands der Technik offenbaren ebenfalls verschiedene Haushaltsgeräte, die mit einer Gestendetektion und -erkennung ausgestattet sind: GB 2525398 A, DE 202014101897 U1, EP 2615376 A1, DE 102014208407 A1 und DE 102014007173 A1.

Die Aufgabe der Erfindung besteht insbesondere darin, eine gattungsgemäße Vorrichtung mit verbesserten Eigenschaften hinsichtlich eines hohen Bedienkomforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Haushaltsgerät mit einer Haushaltsgerätevorrichtung, insbesondere mit einer Kochfeldvorrichtung und vorteilhaft mit einer Induktionskochfeldvorrichtung, mit einer Sensoreinheit, die dazu vorgesehen ist, in wenigstens einem Betriebszustand wenigstens eine Bediengeste eines Bedieners zu detektieren, und mit einer Steuereinheit, die dazu vorgesehen ist, in dem Betriebszustand auf Basis der durch die Sensoreinheit detektierten Bediengeste wenigstens eine Aktion auszuführen und/oder einzuleiten.

Es wird vorgeschlagen, dass die Steuereinheit dazu vorgesehen ist, in dem Betriebszustand in Abhängigkeit von zumindest einer Markierungsbewegungs-Bediengeste zumindest eine Markierung über zumindest eine Anzeigefläche zu bewegen. Unter einer "Haushaltsgerätevorrichtung" soll insbesondere zumindest ein Teil, insbesondere eine Unterbaugruppe, eines Haushaltsgeräts, insbesondere eines Kochfelds und vorteilhaft eines Induktionskochfelds, verstanden werden. Insbesondere kann die Haushaltsgerätevorrichtung auch das gesamte Haushaltsgerät, insbesondere das gesamte Kochfeld und vorteilhaft das gesamte Induktionskochfeld, umfassen. Ein die Haushaltsgerätevorrichtung aufweisendes Haushaltsgerät ist insbesondere als Weiße Ware zu bezeichnen und vorteilhaft dazu vorgesehen, einem Benutzer eine Haushaltsarbeit wenigstens teilweise zu erleichtern und/oder abzunehmen. Das Haushaltsgerät ist vorteilhaft von einem Unterhaltungsgerät, das insbesondere als Braune Ware zu bezeichnen ist, verschieden ausgebildet, wobei das Haushaltsgerät insbesondere als Dunstabzugshaube, vorteilhaft als Reinigungsgerät, besonders vorteilhaft als Gerät zur Wäschepflege und vorzugsweise als Küchengerät ausgebildet ist. Unter einer "Sensoreinheit" soll insbesondere eine Einheit verstanden werden, die zu einer Detektion der Bediengeste zumindest einen Sensor aufweist und die insbesondere die von dem Sensor detektierte Bediengeste in elektrische Signale umwandelt und vorteilhaft an die Steuereinheit ausgibt. Beispielsweise könnte der Sensor dazu vorgesehen sein, die Bediengeste mittels Druckschwankungen und/oder Dichteschwankungen zu detektieren, wie insbesondere mittels Ultraschall. Alternativ oder zusätzlich könnte der Sensor dazu vorgesehen sein, die Bediengeste mittels elektromagnetischer Wellen, wie beispielsweise sichtbarem Licht und/oder ultravioletter Strahlung und/oder Infrarot-Strahlung und/oder Mikrowellen-Strahlung, zu detektieren. Vorteilhaft könnte der Sensor insbesondere ein optischer Sensor sein und insbesondere dazu vorgesehen sein, die Bediengeste mittels einer Bilderfassung und/oder mittels einer Kamera und/oder mittels einer Streifenprojektion zu detektieren. Alternativ oder zusätzlich könnte die Sensoreinheit insbesondere dazu vorgesehen sein, die Bediengeste mittels eines stereoskopischen Systems, welches insbesondere durch zumindest zwei Sensoren und vorteilhaft durch zumindest zwei optische Sensoren definiert sein könnte, zu detektieren. Die Sensoreinheit könnte alternativ oder zusätzlich insbesondere dazu vorgesehen sein, die Bediengeste mittels zumindest einer stereoskopischen Kamera zu detektieren. Insbesondere könnte die Sensoreinheit zumindest eine RGB-Kamera und/oder zumindest eine stereoskopische Kamera und/der zumindest eine monochromatische Kamera und/oder zumindest einen Time-of-Flight-Sensor und/oder zumindest einen RGB-D Sensor aufweisen. Die Sensoreinheit könnte in einer Einbaulage beispielsweise auf einer einem Bediener zugewandten Seite einer Haushaltsgeräteblende und/oder Haushaltsgeräteplatte angeordnet sein. Im Fall einer als Kochfeldplatte ausgebildeten Haushaltsgeräteplatte könnte die Sensoreinheit insbesondere oberhalb, insbesondere direkt oberhalb, der Haushaltsgeräteplatte angeordnet sein, wie beispielsweise in einem an der Haushaltsgeräteplatte montierten Gehäuse. Ebenfalls denkbar ist insbesondere eine Anordnung der Sensoreinheit in einer Dunstabzugshaube. Die Sensoreinheit könnte beispielsweise an einem Außengehäuse eines Haushaltsgeräts montiert sein, wie beispielsweise im Fall eines als Kältegerät und/oder als Wäschepflegegerät und/oder als Reinigungsgerät ausgebildeten Haushaltsgeräts. Vorzugsweise ist die Sensoreinheit in einer Einbaulage auf einer einem Bediener abgewandten Seite einer Haushaltsgeräteplatte angeordnet, wobei die Sensoreinheit insbesondere innerhalb eines von einem Außengehäuse umschlossenen Hohlraums angeordnet ist. Insbesondere weist die Haushaltsgerätevorrichtung zumindest eine Haushaltsgeräteplatte auf, welche insbesondere ein Außengehäuse wenigstens teilweise ausbildet und welche insbesondere als eine Kochfeldplatte ausgebildet ist. Unter einer "Bediengeste" soll insbesondere eine Bewegung eines Körperteils des Bedieners verstanden werden, welche der Bediener zu einer Eingabe von Betriebsparametern bewusst, insbesondere zielgerichtet, und vorteilhaft mit einem zumindest weitgehend vordefinierten Bewegungsablauf ausführt, um insbesondere eine korrekte Detektion durch die Sensoreinheit und/oder eine Auswertung durch die Steuereinheit zu gewährleisten, und welche der Bediener insbesondere berührungslos, insbesondere unter Vermeidung einer Berührung und/oder Kontaktierung einer Bedienoberfläche, vornimmt. Das Körperteil des Bedieners könnte beispielsweise ein Arm, besonders vorteilhaft eine Hand und/oder vorteilhaft zumindest ein Finger, des Bedieners sein. Insbesondere ist die Steuereinheit dazu vorgesehen, in dem Betriebszustand eine Anzahl an Fingern zu zählen und/oder eine Position von Fingern zu berücksichtigen und insbesondere mit in einer Speichereinheit der Steuereinheit gespeicherten, insbesondere vordefinierten Bediengesten zu vergleichen. Die Steuereinheit ist insbesondere dazu vorgesehen, in dem Betriebszustand insbesondere in Abhängigkeit von einer Anzahl an gezählten Fingern und/oder in Abhängigkeit von einer Position an detektierten Fingern insbesondere vordefinierte Bediengesten zu erkennen und vorteilhaft zu berücksichtigen. Die Steuereinheit könnte insbesondere dazu vorgesehen sein, eine Anzahl an Fingern der Bediengeste zu zählen und die Bediengeste ausschließlich in Abhängigkeit einer Übereinstimmung zwischen der gezählten Anzahl an Fingern und einer in der Speichereinheit gespeicherten Anzahl an Fingern von zumindest einer Bediengeste, welche insbesondere vordefiniert und vorteilhaft Teil einer Gruppe von vordefinierten Bediengesten sein könnte, zu berücksichtigen. Die Steuereinheit könnte alternativ oder zusätzlich insbesondere dazu vorgesehen sein, eine Position von Fingern der Bediengeste zu ermitteln und die Bediengeste ausschließlich in Abhängigkeit einer Übereinstimmung zwischen der ermittelten Position der Finger der Bediengeste und in der Speichereinheit gespeicherten Positionen von Fingern von zumindest einer Bediengeste, welche insbesondere vordefiniert und vorteilhaft Teil einer Gruppe von vordefinierten Bediengesten sein könnte, zu berücksichtigen. Die Bedienoberfläche könnte beispielsweise eine Oberfläche einer Haushaltsgeräteplatte, insbesondere eine Oberfläche einer als Kochfeldplatte ausgebildeten Haushaltsgeräteplatte, und/oder eine Oberfläche einer Bedienerschnittstelle und/oder eine Oberfläche eines insbesondere berührungsempfindlichen Displays sein. Die Bediengeste ist insbesondere zu einer berührungslosen Übermittlung von Bedienbefehlen insbesondere an die Steuereinheit vorgesehen. Insbesondere weist die Haushaltsgerätevorrichtung zumindest eine Bedienerschnittstelle auf, welche insbesondere zu einer Eingabe und/oder zu einer Auswahl von Betriebsparametern vorgesehen ist. Unter "vordefiniert" soll insbesondere zeitlich zuvor insbesondere unveränderbar definiert und/oder festgelegt und/oder in einer Speichereinheit der Steuereinheit gespeichert verstanden werden. Unter einer "Steuereinheit" soll insbesondere eine elektronische Einheit verstanden werden, die vorzugsweise in einer Steuer- und/oder Regeleinheit eines Haushaltsgeräts zumindest teilweise integriert ist und die vorteilhaft dazu vorgesehen ist, zumindest die elektrischen Komponenten des Haushaltsgeräts zu steuern und/oder zu regeln, und die vorzugsweise dazu vorgesehen ist, auf Basis der durch die Sensoreinheit detektierten Bediengeste wenigstens eine Aktion auszuführen und/oder einzuleiten. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Steuereinheit wertet insbesondere die von der Sensoreinheit detektierte Bediengeste aus, wobei die Steuereinheit insbesondere die detektierte Bediengeste mit in der Speichereinheit der Steuereinheit gespeicherten Bediengesten vergleicht und vorteilhaft einer Aktion zuordnet, welche die Steuereinheit anschließend insbesondere ausführt und/oder einleitet. Unter der Wendung, dass die Steuereinheit eine Aktion "einleitet", soll insbesondere verstanden werden, dass die Steuereinheit wenigstens ein Signal, wie insbesondere einen Befehl und/oder eine Ausführungsanordnung, an eine weitere Einheit, beispielsweise über ein Bussystem, ausgibt, welche die Aktion anschließend ausführt. Beispielsweise könnte die Steuereinheit das Signal an eine Ausgabeeinheit ausgeben, um insbesondere eine Ausgabe an einen Bediener zu erreichen. Alternativ oder zusätzlich könnte die Steuereinheit das Signal an eine Versorgungseinheit insbesondere der Haushaltsgerätevorrichtung und/oder des Haushaltsgeräts ausgeben, um eine Aktivierung einer elektrischen Einheit zu erreichen, wie beispielsweise einer Heizeinheit und/oder eines Motors und/oder eines Kompressors. Vorteilhaft gibt die Steuereinheit das Signal in dem Betriebszustand an eine Bedienerschnittstelle und/oder zumindest an die Anzeigefläche aus. Unter einer "Markierungsbewegungs-Bediengeste" soll insbesondere eine Bediengeste verstanden werden, welche dazu vorgesehen ist, zumindest eine Markierung über zumindest eine Anzeigefläche zu bewegen und welche insbesondere speziell der Bewegung der Markierung zugeordnet ist. Beispielsweise könnte die Markierungsbewegungs-Bediengeste zumindest eine insbesondere vordefinierte, der Bewegung der Markierung zugeordnete Gestalt insbesondere des Körperteils des Bedieners aufweisen. Alternativ oder zusätzlich könnte die Markierungsbewegungs-Bediengeste eine insbesondere vordefinierte, der Bewegung der Markierung zugeordnete Bewegungsrichtung und/oder Bewegungsart und/oder Bewegungsform insbesondere des Körperteils des Bedieners aufweisen. Unter einer "Markierung" soll insbesondere ein auf einer Anzeigefläche angezeigtes Element verstanden werden, welches dazu vorgesehen ist, in dem Betriebszustand eine Position und/oder einen Bereich anzuzeigen und/oder kenntlich zu machen und/oder hervorzuheben. Die Markierung ist insbesondere dazu vorgesehen, eine Position des Körperteils des Bedieners hervorzuheben und/oder kenntlich zu machen. Die Steuereinheit ist insbesondere dazu vorgesehen, in dem Betriebszustand der Bediengeste, insbesondere der Bewegung des Körperteils, mittels der Markierung zu folgen und diese insbesondere über die Anzeigefläche zu bewegen. Die Markierung könnte beispielsweise eine Gestalt eines Ovals und/oder eines Kreises und/oder eines Kreuzes und/oder eines Rechtecks und/oder eines Pfeils und/oder eines Cursors und/oder eines Balkens und/oder einer Säule und/oder eines Hakens annehmen. Alternativ oder zusätzlich könnte die Markierung insbesondere ein Bereich erhöhter Helligkeit und/oder ein durch eine Farbgebung hervorgehobener Bereich und/oder ein blinkender Bereich sein. Die Markierung könnte alternativ oder zusätzlich insbesondere eine Information, insbesondere eine Helligkeitsinformation und/oder eine Farbinformation, sein. Beispielsweise könnte die Steuereinheit dazu vorgesehen sein, in dem Betriebszustand in Abhängigkeit von der Bediengeste zumindest zwei, insbesondere zumindest drei, vorteilhaft zumindest fünf und vorzugsweise mehrere Markierungen über die Anzeigefläche zu bewegen. Insbesondere ist die Steuereinheit dazu vorgesehen, in dem Betriebszustand in Abhängigkeit von der Bediengeste insbesondere genau eine Markierung über die Anzeigefläche zu bewegen. Unter einer "Anzeigefläche" soll insbesondere eine zu einer Anzeige vorgesehene Oberfläche verstanden werden, unterhalb welcher in einer Einbaulage insbesondere zumindest eine Lichtquelle angeordnet ist. Die Lichtquelle könnte beispielsweise eine LED und/oder ein Display und/oder ein LCD-Display und/oder eine Flüssigkeitskristallanzeige und/oder ein OLED und/oder ein Laser sein. Beispielsweise könnte die Anzeigefläche wenigstens teilweise eine Oberfläche einer Bedienerschnittstelle sein. Alternativ oder zusätzlich könnte die Anzeigefläche eine wenigstens teilweise transparente Oberfläche sein, wie beispielsweise eine Oberfläche einer Haushaltsgeräteplatte, insbesondere einer als Kochfeldplatte ausgebildeten Haushaltsgeräteplatte. Insbesondere könnte die Steuereinheit dazu vorgesehen sein, in dem Betriebszustand die Lichtquelle zu aktivieren und insbesondere die Markierung mittels zeitlich aufeinanderfolgender Aktivierung verschiedener, insbesondere benachbarter Stellen der Anzeigefläche über die Anzeigefläche zu bewegen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Bedienkomfort erreicht werden. Insbesondere kann einem Bediener Rückmeldung bezüglich der vorgenommenen Bediengeste gegeben werden, wodurch insbesondere ein Erlernen einer Bedienung des Haushaltsgeräts mittels Bediengesten vereinfacht werden kann. Ein autodidaktisches Erlernen einer Bedienung des Haushaltsgeräts kann insbesondere ermöglicht werden. Insbesondere kann ein Bediener Fehler in einer Bedienung des Haushaltsgeräts aufgrund der Markierung erkennen und vorteilhaft korrigieren. Aufgrund einer Möglichkeit, durch die Rückmeldung zumindest in Form der Markierung eine Vielzahl an Bediengesten einfach zu erlernen, kann vorteilhaft eine große Vielfalt an Bediengesten vorgesehen und/oder definiert werden.

Ferner wird vorgeschlagen, dass die Steuereinheit dazu vorgesehen ist, in dem Betriebszustand zumindest eine Verifikations-Routine durchzuführen, um eine Möglichkeit einer Fehlbedienung zu reduzieren. Unter einer "Verifikations-Routine" soll insbesondere zumindest eine von der Steuereinheit durchgeführte Operation verstanden werden, mittels welcher die Steuereinheit insbesondere eine von der Sensoreinheit vorgenommene Detektion analysiert und insbesondere in zumindest zwei Verifikations-Kategorien unterteilt. Eine erste Verifikations-Kategorie könnte beispielsweise für eine insbesondere gültige Bediengeste und eine zweite Verifikations-Kategorie könnte beispielsweise für eine Fehlbedienung vorgesehen sein. Die Steuereinheit könnte insbesondere dazu vorgesehen sein, in dem Betriebszustand bei der Verifikations-Routine ausschließlich in der Speichereinheit der Steuereinheit gespeicherte Bediengesten und/oder vor dem Betriebszustand eindeutig definierte Bediengesten anzunehmen, wodurch insbesondere eine besonders strenge Verifikations-Routine bereitgestellt und/oder eine hohe Sicherheit erreicht werden kann. Die Steuereinheit ist dazu vorgesehen, in dem Betriebszustand bei der Verifikations-Routine eine Größe und/oder eine Form des Körperteils des Bedieners zu berücksichtigen, insbesondere um eine von einer unautorisierten Person vorgenommene Bediengeste zu erkennen und insbesondere die von der unautorisierten Person vorgenommene Bediengeste zu ignorieren und/oder unberücksichtigt zu lassen. Insbesondere könnte die Steuereinheit dazu vorgesehen sein, in dem Betriebszustand bei der Verifikations-Routine Erwachsene Personen von Kindern zu unterscheiden und insbesondere eine von einem Kind durchgeführte Bediengeste als ungültige Bediengeste zu erkennen und insbesondere unberücksichtigt zu lassen. Die Steuereinheit könnte alternativ oder zusätzlich insbesondere dazu vorgesehen sein, in dem Betriebszustand bei der Verifikations-Routine ausschließlich registrierte und/oder in der Speichereinheit der Steuereinheit gespeicherte Körperteile von Bedienern zu berücksichtigen. Zu einer Registrierung eines Körperteils eines Bedieners könnte beispielsweise ein Scan des Körperteils vorgesehen sein, wie beispielsweise zumindest einer Handfläche und/oder zumindest eines Fingers. Alternativ oder zusätzlich könnte die Steuereinheit insbesondere dazu vorgesehen sein, in dem Betriebszustand insbesondere in einem Lernprozess eine Vornahme und/oder Durchführung einer Bewegung des Körperteils des Bedieners zu analysieren und insbesondere den Bediener anhand einer Vornahme und/oder Durchführung einer Bewegung zu erkennen. Unter einer "Fehlbedienung" soll insbesondere eine Detektion einer von einer insbesondere gültigen Bediengeste abweichenden Geste und/oder eine Detektion eines Gegenstands und/oder eine Detektion einer ungültigen Bediengeste verstanden werden, welche insbesondere von einer unautorisierten und/oder unberechtigten Person durchgeführt sein könnte. Die von der gültigen Bediengeste abweichende Geste könnte beispielsweise eine Bewegung des Bedieners, insbesondere eines Körperteils des Bedieners, welche insbesondere zu einer Handhabung von Gegenständen und/oder zu einer Bearbeitung von Lebensmitteln dient, sein. Alternativ oder zusätzlich könnte die von der gültigen Bediengeste abweichende Geste eine Alltagsbewegung des Bedieners sein, wie beispielsweise eine während einer Unterhaltung ausgeführte Bewegung. Der Gegenstand könnte beispielsweise ein Geschirr und/oder ein Besteck und/oder ein Gargeschirr und/oder ein Lebensmittel und/oder ein Kleidungsstück sein. Die ungültige Bediengeste könnte beispielsweise eine von einer unberechtigten Person vorgenommene Bediengeste sein. Insbesondere könnte die unberechtigte Person ein Kind und/oder ein Fremder sein. Die unautorisierte Person könnte sich insbesondere von einer autorisierten Person unterscheiden, welche insbesondere registriert und vorteilhaft in der Speichereinheit der Steuereinheit als registrierte Person gespeichert ist. Dadurch können insbesondere besonders strenge Sicherheitsstandards erfüllt und/oder eine Fehlbedienung erfolgreich verhindert werden. Insbesondere können fehlerhafte und/oder ungültige Bediengesten und/oder Gegenstände von insbesondere gültigen Bediengesten unterschieden werden, wodurch insbesondere eine optimal funktionierende und/oder robuste und/oder stabile Gestensteuerung ermöglicht werden kann.

Zudem wird vorgeschlagen, dass die Steuereinheit dazu vorgesehen ist, in dem Betriebszustand die Markierung ausschließlich in Abhängigkeit von vordefinierten Markierungsbewegungs-Bediengesten über die Anzeigefläche zu bewegen. Insbesondere ist die Steuereinheit dazu vorgesehen, in dem Betriebszustand zumindest eine detektierte Bediengeste mit in der Speichereinheit der Steuereinheit gespeicherten Markierungsbewegungs-Bediengesten zu vergleichen und insbesondere ausschließlich bei ausreichender Übereinstimmung zwischen der detektierten Bediengeste und den in der Speichereinheit der Steuereinheit gespeicherten Markierungsbewegungs-Bediengesten die Markierung über die Anzeigefläche zu bewegen. Die Steuereinheit ist insbesondere dazu vorgesehen, in dem Betriebszustand zumindest eine detektierte Bediengeste, welche sich von insbesondere in der Speichereinheit der Steuereinheit gespeicherten Markierungsbewegungs-Bediengesten unterscheidet, unberücksichtigt zu lassen und/oder zu ignorieren und insbesondere eine Bewegung der Markierung über die Anzeigefläche zu unterlassen. Dadurch kann insbesondere eine hohe Sicherheit gewährleistet und/oder eine Verärgerung eines Bedieners über fehlerhaft zugeordnete Gesten vermieden werden.

Weiterhin wird vorgeschlagen, dass die Steuereinheit dazu vorgesehen ist, in dem Betriebszustand ausschließlich in einem Bedienbereich vorgenommene Bediengesten zu berücksichtigen. Insbesondere ist die Steuereinheit dazu vorgesehen, in dem Betriebszustand außerhalb des Bedienbereichs vorgenommene Bediengesten, insbesondere im Fall einer Detektion zumindest einer der außerhalb des Bedienbereichs vorgenommenen Bediengesten, unberücksichtigt zu lassen und/oder zu ignorieren. Unter einem "Bedienbereich" soll insbesondere ein räumlicher Bereich verstanden werden, welcher insbesondere zumindest eine Grundfläche und insbesondere zumindest eine senkrecht zu der Grundfläche ausgerichtete Höhe aufweist und welcher insbesondere zu einer Vornahme und/oder Ausführung zumindest einer insbesondere gültigen Bediengeste vorgesehen ist. Insbesondere weist der Bedienbereich eine Größe auf, welche zumindest durch die Grundfläche und die Höhe definiert ist. Die Grundfläche ist insbesondere in einer wenigstens im Wesentlichen parallel zu der Anzeigefläche ausgerichteten Ebene angeordnet. Der Bedienbereich könnte beispielsweise eine Säule sein und insbesondere einen räumlichen Bereich definieren, welcher sich insbesondere wenigstens im Wesentlichen senkrecht zu einer seitlichen Berandung der Grundfläche in der Vertikalrichtung erstreckt. Alternativ könnte der Bedienbereich zumindest einen Öffnungswinkel aufweisen und insbesondere in Abhängigkeit von der Höhe größer werden. Eine seitliche den Bedienbereich aufspannende Begrenzungsfläche könnte beispielsweise schräg relativ zu der Grundfläche ausgerichtet sein. Insbesondere weist die Grundfläche eine Längserstreckung von mindestens 50 mm, insbesondere von mindestens 70 mm vorteilhaft von mindestens 80 mm, besonders vorteilhaft von mindestens 90 mm und vorzugsweise von mindestens 100 mm auf. Die Grundfläche weist insbesondere eine Längserstreckung von maximal 600 mm, insbesondere von maximal 500 mm vorteilhaft von maximal 400 mm, besonders vorteilhaft von maximal 300 mm und vorzugsweise von maximal 200 mm auf. Insbesondere weist die Grundfläche eine Quererstreckung von mindestens 100 mm, insbesondere von mindestens 130 mm vorteilhaft von mindestens 160 mm, besonders vorteilhaft von mindestens 180 mm und vorzugsweise von mindestens 200 mm auf. Die Grundfläche weist insbesondere eine Quererstreckung von maximal 700 mm, insbesondere von maximal 600 mm vorteilhaft von maximal 500 mm, besonders vorteilhaft von maximal 400 mm und vorzugsweise von maximal 300 mm auf. Die Quererstreckung der Grundfläche ist insbesondere größer als die Längserstreckung der Grundfläche. Die Höhe des Bedienbereichs erstreckt sich insbesondere ausgehend von der Grundfläche in der Vertikalrichtung. Beispielsweise könnte die Größe des Bedienbereichs vordefiniert sein. Alternativ oder zusätzlich könnte die Größe des Bedienbereichs insbesondere manuell veränderbar sein, beispielsweise durch eine Bedieneingabe mittels einer Bedienerschnittstelle. Die Größe des Bedienbereichs könnte alternativ oder zusätzlich insbesondere abhängig von einer Größe der Anzeigefläche und/oder von einer Größe einer Haushaltsgeräteplatte, insbesondere einer als Kochfeldplatte ausgebildeten Haushaltsgeräteplatte, und/oder von jeweiligen Gegebenheiten eines Haushaltsgeräts, insbesondere eines Kochfelds und vorteilhaft eines Induktionskochfelds, sein. Dadurch kann ein Bediener insbesondere in einem von dem Bedienbereich abweichenden Bereich bedenkenlos agieren. Insbesondere kann ein Detektionsbereich der Sensoreinheit auf den Bedienbereich beschränkt werden, wodurch insbesondere geringe Kosten erzielt werden können.

Gemäß der Erfindung ist die Steuereinheit dazu vorgesehen, in dem Betriebszustand eine Bediengeste ausschließlich in Abhängigkeit einer zuvor erkannten Verifikations-Bediengeste zu berücksichtigen. Unter einer "Verifikations-Bediengeste" soll insbesondere eine Bediengeste verstanden werden, welche sich insbesondere von einer Fehlbedienung unterscheidet und welche insbesondere zu einer Kenntlichmachung einer Bedien-Absicht vorgesehen ist und in Abhängigkeit welcher die Steuereinheit insbesondere einen Bedienmodus einleitet und/oder startet. Der Bedienmodus ist insbesondere ein Modus, in welchem die Steuereinheit insbesondere in Abhängigkeit von zumindest einer gültigen Bediengeste zumindest eine Aktion ausführt und/oder einleitet. Beispielsweise könnte die Verifikations-Bediengeste zumindest eine insbesondere vordefinierte, der Verifikation zugeordnete Gestalt insbesondere des Körperteils des Bedieners aufweisen. Alternativ oder zusätzlich könnte die Verifikations-Bediengeste eine insbesondere vordefinierte, der Bewegung der Verifikation zugeordnete Bewegungsrichtung und/oder Bewegungsart und/oder Bewegungsform insbesondere des Körperteils des Bedieners aufweisen. Eine Detektion und/oder eine Erkennung der Verifikations-Bediengeste erfolgt insbesondere zeitlich vor einer Detektion und/oder einer Erkennung der Bediengeste. Die Verifikations-Bediengeste könnte insbesondere eine Gestalt einer offenen Hand annehmen. Dadurch kann insbesondere ein besonders sicheres Gestenbedien-System geschaffen werden.

Die Steuereinheit ist insbesondere dazu vorgesehen, in dem Betriebszustand in Abhängigkeit von einer insbesondere erstmaligen Detektion einer Bediengeste, insbesondere einer Verifikations-Bediengeste, eine vordefinierte Verifikations-Zeitspanne zu starten. Vorzugsweise ist die Steuereinheit dazu vorgesehen, in dem Betriebszustand eine Bediengeste ausschließlich in Abhängigkeit einer zuvor erkannten und über eine vordefinierte Verifikations-Zeitspanne gehaltenen Verifikations-Bediengeste zu berücksichtigen. Insbesondere ist die Steuereinheit dazu vorgesehen, in dem Betriebszustand eine Bediengeste ausschließlich in Abhängigkeit einer über mindestens 80 %, insbesondere über mindestens 85 %, vorteilhaft über mindestens 90 % und vorzugsweise über mindestens 95 % der Verifikations-Zeitspanne wenigstens im Wesentlichen konstant ausgeführten Verifikations-Bediengeste zu berücksichtigen. Die Steuereinheit ist insbesondere dazu vorgesehen, in dem Betriebszustand Toleranzen bezüglich eines Haltens der Verifikations-Bediengeste zu berücksichtigen. Eine Toleranz in dem Halten der Verifikations-Bediengeste könnte beispielsweise eine insbesondere leichte Zitterbewegung sein, wie beispielsweise bei einem unruhigen und/oder erkrankten Bediener. Unter einer "Verifikations-Zeitspanne" soll insbesondere eine Zeitspanne verstanden werden, welche einer Bedienung mittels der Bediengeste zeitlich vorgeschaltet ist und innerhalb welcher die Steuereinheit insbesondere die Verifikations-Routine ausführt. Insbesondere weist die Verifikations-Zeitspanne eine Dauer von mindestens 0,2 s, insbesondere von mindestens 0,3 s, vorteilhaft von mindestens 0,4 s und vorzugsweise von mindestens 0,5 s auf. Die Verifikations-Zeitspanne weist insbesondere eine Dauer von maximal 5 s, insbesondere von maximal 3 s, vorteilhaft von maximal 2 s und vorzugsweise von maximal 1,5 s auf. Dadurch können insbesondere besonders strenge Voraussetzungen zu einer Berücksichtigung der Bediengeste geschaffen werden, wodurch insbesondere ein hohes Maß an Komfort für einen Bediener aufgrund einer geringen Anzahl an Fehlbedienungen ermöglicht werden kann.

Weiterhin wird vorgeschlagen, dass die Steuereinheit dazu vorgesehen ist, in dem Betriebszustand in Abhängigkeit einer Position der Markierung eine Vorauswahl zu treffen und insbesondere auf eine insbesondere durch zumindest eine Bestätigungs-Bediengeste vorgenommene Bestätigung der Vorauswahl zu warten. Unter einer "Vorauswahl" eines Objekts und/oder einer Aktion soll insbesondere eine Anwahl des Objekts und/oder der Aktion aus einer Gruppe von Objekten und/oder Aktionen mit dem Ziel einer Auswahl des angewählten Objekts und/oder der angewählten Aktion verstanden werden. Die Vorauswahl des Objekts und/oder der Aktion ist insbesondere eine bevorzugte Stellung des vorausgewählten Objekts und/oder der vorausgewählten Aktion gegenüber gleichartigen Objekten und/oder Aktionen. Insbesondere ist die Steuereinheit dazu vorgesehen, in dem Betriebszustand die Vorauswahl für eine nachfolgende Bestätigung vorzumerken. Beispielsweise könnte die Anzeigefläche zu einer Anzeige eines Menüs und die Steuereinheit dazu vorgesehen sein, in dem Betriebszustand die Markierung auf einen bestimmten Menüpunkt des Menüs, welches zumindest zwei Menüpunkte aufweisen könnte, über die Anzeigefläche zu bewegen. Insbesondere könnte die Vorauswahl der aus den Menüpunkten insbesondere von einem Bediener angewählte bestimmte Menüpunkt sein. Dadurch kann insbesondere ein hoher Bedienkomfort und/oder eine schnelle Ausführung der Vorauswahl im Fall einer Bestätigung der Vorauswahl erzielt werden.

Vorzugsweise ist die Steuereinheit dazu vorgesehen, in dem Betriebszustand in Abhängigkeit von zumindest einer Bestätigungs-Bediengeste zumindest eine Vorauswahl anzunehmen. Unter einer "Bestätigungs-Bediengeste" soll insbesondere eine Bediengeste verstanden werden, welche insbesondere zu einer Bestätigung der Vorauswahl vorgesehen ist und in Abhängigkeit welcher die Steuereinheit insbesondere eine der Vorauswahl zugeordnete Aktion ausführt und/oder einleitet. Beispielsweise könnte die Bestätigungs-Bediengeste zumindest eine insbesondere vordefinierte, der Annahme der Vorauswahl zugeordnete Gestalt insbesondere des Körperteils des Bedieners aufweisen. Alternativ oder zusätzlich könnte die Bestätigungs-Bediengeste eine insbesondere vordefinierte, der Annahme der Vorauswahl zugeordnete Bewegungsrichtung und/oder Bewegungsart und/oder Bewegungsform insbesondere des Körperteils des Bedieners aufweisen. Beispielsweise könnte die Bestätigungs-Bediengeste einteilig ausgebildet sein und insbesondere aus einem insbesondere einzigen Teil der Bestätigungs-Bediengeste und/oder aus einer insbesondere einzigen Form und/oder Gestalt des Körperteils bestehen. Alternativ oder zusätzlich könnte die Bestätigungs-Bediengeste zumindest zweiteilig und insbesondere mehrteilig ausgebildet sein und insbesondere aus zumindest zwei verschiedenen Teilen der Bestätigungs-Bediengeste und/oder aus zumindest zwei verschiedenen Formen und/oder Gestalten des Körperteils bestehen. Die Bestätigungs-Bediengeste könnte insbesondere zu einer Bestätigung einer Vorauswahl einer Heizzone und/oder einer Vorauswahl einer Heizintensität und/oder einer Vorauswahl einer Timer-Einstellung und/oder einer Vorauswahl einer Aktivierung eines Alarms und/oder einer Vorauswahl einer Deaktivierung eines Alarms vorgesehen sein. Dadurch kann insbesondere einem Bediener die Möglichkeit gegeben werden, selbst über einen Zeitpunkt einer Bestätigung der Vorauswahl und damit verbunden einer Ausführung einer der Vorauswahl zugeordneten Aktion zu entscheiden, wodurch ein besonders hoher Komfort erreicht werden kann. Insbesondere kann eine vorschnelle Ausführung einer der Vorauswahl zugeordneten Aktion, beispielsweise im Fall einer Meinungsänderung des Bedieners, vermieden werden. Insbesondere kann eine hohe Akzeptanz bei einem Bediener erreicht werden.

Zudem wird vorgeschlagen, dass die Steuereinheit dazu vorgesehen ist, in dem Betriebszustand die Vorauswahl ausschließlich in Abhängigkeit von vordefinierten Bestätigungs-Bediengesten anzunehmen. Insbesondere ist die Steuereinheit dazu vorgesehen, in dem Betriebszustand zumindest eine detektierte Bediengeste mit in der Speichereinheit der Steuereinheit gespeicherten Bestätigungs-Bediengesten zu vergleichen und insbesondere ausschließlich bei ausreichender Übereinstimmung zwischen der detektierten Bediengeste und den in der Speichereinheit der Steuereinheit gespeicherten Bestätigungs-Bediengesten die Vorauswahl anzunehmen.

Die Steuereinheit ist insbesondere dazu vorgesehen, in dem Betriebszustand zumindest eine detektierte Bediengeste, welche sich von insbesondere in der Speichereinheit der Steuereinheit gespeicherten Bestätigungs-Bediengesten unterscheidet, unberücksichtigt zu lassen und/oder zu ignorieren und insbesondere eine Ausführung einer der Bestätigungs-Bediengeste zugeordneten Aktion zu unterlassen. Dadurch kann insbesondere eine hohe Sicherheit gewährleistet und/oder eine Verärgerung eines Bedieners über fälschlicherweise ausgeführte Aktionen vermieden werden.

Die Steuereinheit ist insbesondere dazu vorgesehen, in dem Betriebszustand in Abhängigkeit von einer insbesondere erstmaligen Detektion einer Bestätigungs-Bediengeste, insbesondere eines ersten Teils einer Bestätigungs-Bediengeste, eine vordefinierte Bestätigungs-Zeitspanne zu starten. Vorzugsweise ist die Steuereinheit dazu vorgesehen, in dem Betriebszustand die Vorauswahl ausschließlich in Abhängigkeit von vordefinierten und innerhalb einer vordefinierten Bestätigungs-Zeitspanne durchgeführten Bestätigungs-Bediengesten anzunehmen. Insbesondere ist die Steuereinheit dazu vorgesehen, in dem Betriebszustand im Fall eines Ausbleibens der Bestätigungs-Bediengeste innerhalb des Bestätigungs-Zeitintervalls die Vorauswahl zu verwerfen und insbesondere in einen Ausgangszustand zurückzukehren. Die Steuereinheit ist insbesondere dazu vorgesehen, in dem Betriebszustand im Fall einer unvollständigen Ausführung der Bestätigungs-Bediengeste innerhalb des Bestätigungs-Zeitintervalls die Vorauswahl zu verwerfen und insbesondere in einen Ausgangszustand zurückzukehren. In dem Ausgangszustand ist die Steuereinheit insbesondere dazu vorgesehen, auf eine Detektion einer Verifikations-Bediengeste zu warten. Unter einer "Bestätigungs-Zeitspanne" soll insbesondere eine Zeitspanne verstanden werden, welche insbesondere zeitlich nach einer getroffenen Vorauswahl angeordnet ist und innerhalb welcher die Steuereinheit insbesondere auf eine Bestätigung, insbesondere durch Ausführung zumindest einer Bestätigungs-Bediengeste, der Vorauswahl wartet und/oder innerhalb welcher eine Bestätigungs-Bediengeste insbesondere vornehmbar ist und/oder vorgenommen werden kann. Insbesondere weist die Bestätigungs-Zeitspanne eine Dauer von mindestens 0,1 s, insbesondere von mindestens 0,2 s, vorteilhaft von mindestens 0,3 s und vorzugsweise von mindestens 0,4 s auf. Die Bestätigungs-Zeitspanne weist insbesondere eine Dauer von maximal 3 s, insbesondere von maximal 1,5 s, vorteilhaft von maximal 1 s und vorzugsweise von maximal 0,7s auf. Beispielsweise könnte eine Dauer der Bestätigungs-Zeitspanne vordefiniert sein. Alternativ oder zusätzlich könnte eine Dauer der Bestätigungs-Zeitspanne insbesondere manuell veränderbar sein, beispielsweise durch eine Bedieneingabe mittels einer Bedienerschnittstelle. Dadurch kann insbesondere ein hohes Maß an Sicherheit erreicht werden.

Ferner wird vorgeschlagen, dass die Steuereinheit dazu vorgesehen ist, in dem Betriebszustand eine Gestalt und/oder eine Farbe der Markierung zu verändern, insbesondere um zumindest eine Information insbesondere einem Bediener anzuzeigen. Insbesondere ist die Steuereinheit dazu vorgesehen, in dem Betriebszustand eine Gestalt der Markierung in Abhängigkeit einer Gestalt des Körperteils, insbesondere der Hand, des Bedieners zu verändern. Die Steuereinheit könnte beispielsweise dazu vorgesehen sein, in dem Betriebszustand eine Gestalt der Markierung in Abhängigkeit einer Gestalt des Körperteils des Bedieners zu verändern. Beispielsweise könnte die Steuereinheit dazu vorgesehen sein, in dem Betriebszustand in Abhängigkeit von einer zu einer Faust geformten Hand eine erste Gestalt der Markierung und in Abhängigkeit von einer geöffneten Hand eine zweite Gestalt der Markierung anzuzeigen und/oder zu verwenden. Alternativ oder zusätzlich könnte die Steuereinheit dazu vorgesehen sein, in dem Betriebszustand eine Gestalt der Markierung in Abhängigkeit einer Bewegungsrichtung des Körperteils des Bedieners zu verändern. Beispielsweise könnte die Steuereinheit dazu vorgesehen sein, in dem Betriebszustand in Abhängigkeit von einer wenigstens im Wesentlichen parallel zu der Anzeigefläche ausgeführten Bedienbewegung eine erste Gestalt, beispielsweise in Form eines Kreuzes, anzuzeigen und/oder zu verwenden. Die Steuereinheit könnte beispielsweise dazu vorgesehen sein, in dem Betriebszustand in Abhängigkeit von einer insbesondere bezüglich einer Vertikalrichtung von der Anzeigefläche weggerichteten Bedienbewegung eine erste Gestalt, beispielsweise in Form eines Pfeils nach oben, und/oder in Abhängigkeit von einer insbesondere bezüglich der Vertikalrichtung auf die Anzeigefläche zugerichteten Bedienbewegung eine zweite Gestalt, beispielsweise in Form eines Pfeils nach unten, anzuzeigen und/oder zu verwenden. Die Steuereinheit könnte beispielsweise dazu vorgesehen sein, in dem Betriebszustand in Abhängigkeit von einer erreichten maximalen und/oder minimalen Betriebsparameterwerts, wie beispielsweise einer Heiz-Intensität, eine zweite Markierung, insbesondere in Form eines von einem Kreis umgebenen Kreuzes, anzuzeigen und/oder zu verwenden. Die Steuereinheit könnte beispielsweise dazu vorgesehen sein, in dem Betriebszustand eine Farbe der Markierung in Abhängigkeit einer ausgeführten Bediengeste zu verändern. Beispielsweise könnte die Steuereinheit dazu vorgesehen sein, in dem Betriebszustand in Abhängigkeit von der Markierungsbewegungs-Bediengeste eine erste Farbe, wie beispielsweise schwarz, und/oder in Abhängigkeit von der Bestätigungs-Bediengeste eine zweite, sich von der ersten Farbe unterscheidenden Farbe, wie beispielsweise grün, anzuzeigen und/oder zu verwenden. Die Steuereinheit könnte beispielsweise dazu vorgesehen sein, in dem Betriebszustand in Abhängigkeit von einer ungültigen und/oder unvollständig ausgeführten Bediengeste eine weitere Farbe, wie beispielsweise rot, anzuzeigen und/oder zu verwenden. Unter einer "offenen" und/oder "geöffneten" Hand soll insbesondere eine Hand mit gespreizt angeordneten Fingern verstanden werden, welche insbesondere kontaktlos und/oder beabstandet, insbesondere maximal beabstandet, relativ zueinander angeordnet sind. Unter einer "geschlossenen" Hand soll insbesondere eine Hand mit aneinander anliegenden Fingern verstanden werden, welche insbesondere in direktem Kontakt und/oder unbeabstandet relativ zueinander angeordnet sind. Dadurch kann insbesondere eine hohe Flexibilität und/oder eine Vielzahl an möglichen Rückmeldungen an einen Bediener erzielt werden, wodurch insbesondere ein besonders hoher Bedienkomfort bereitgestellt werden kann.

Ein besonders hoher Bedienkomfort kann erreicht werden durch ein Haushaltsgerät, insbesondere durch ein Kochfeld und vorteilhaft durch ein Induktionskochfeld, mit zumindest einer erfindungsgemäßen Haushaltsgerätevorrichtung, insbesondere einer erfindungsgemäßen Kochfeldvorrichtung und vorteilhaft einer erfindungsgemäßen Induktionskochfeldvorrichtung.

Der Bedienkomfort kann weiter gesteigert werden durch ein Verfahren mit einem erfindungsgemäßen Haushaltsgerät, insbesondere einer erfindungsgemäßen Kochfeldvorrichtung und vorteilhaft einer erfindungsgemäßen Induktionskochfeldvorrichtung, bei dem in wenigstens einem Betriebszustand wenigstens eine Bediengeste eines Bedieners detektiert und in dem Betriebszustand auf Basis der detektierten Bediengeste wenigstens eine Aktion ausgeführt und/oder eingeleitet wird. In dem Betriebszustand wird in Abhängigkeit von zumindest einer Markierungsbewegungs-Bediengeste zumindest eine Markierung über zumindest eine Anzeigefläche bewegt.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Haushaltsgerät mit einer Haushaltsgerätevorrichtung in einem deaktivierten Zustand in einer schematischen perspektivischen Darstellung,
- Fig. 2: einen vergrößerten Ausschnitt aus Figur 1 in einer schematischen Draufsicht,
- Fig. 3: eine Bedienerschnittstelle der Haushaltsgerätevorrichtung und eine Anzeigefläche der Haushaltsgerätevorrichtung, auf welcher eine Markierung in einem Ausgangszustand angeordnet ist, in einem Betriebszustand in einer schematischen Draufsicht,
- Fig. 4: die Bedienerschnittstelle, die Anzeigefläche, auf welcher die Markierung in dem Ausgangszustand angeordnet ist, und ein Körperteil eines Bedieners, welches eine Verifikations-Bediengeste annimmt,
- Fig. 5: die Bedienerschnittstelle, die Anzeigefläche, auf welcher die Markierung in einer ersten Stellung angeordnet ist, und das Körperteil des Bedieners, welches eine Markierungsbewegungs-Bediengeste annimmt, in dem Betriebszustand in einer schematischen Draufsicht,
- Fig. 6: die Bedienerschnittstelle, die Anzeigefläche, auf welcher die Markierung in einer zweiten Stellung angeordnet ist, und das Körperteil des Bedieners, welches die Markierungsbewegungs-Bediengeste annimmt, in dem Betriebszustand in einer schematischen Draufsicht,
- Fig. 7: die Bedienerschnittstelle, die Anzeigefläche, auf welcher die Markierung in einer dritten Stellung angeordnet ist, und das Körperteil des Bedieners, welches die Markierungsbewegungs-Bediengeste annimmt, in dem Betriebszustand in einer schematischen Draufsicht,
- Fig. 8: die Bedienerschnittstelle, die Anzeigefläche, auf welcher die Markierung in der dritten Stellung angeordnet ist, und das Körperteil des Bedieners, welches einen ersten Teil einer Bestätigungs-Bediengeste annimmt, in dem Betriebszustand in einer schematischen Draufsicht,
- Fig. 9: die Bedienerschnittstelle, die Anzeigefläche, auf welcher die Markierung in der dritten Stellung angeordnet ist, und das Körperteil des Bedieners, welches einen zweiten Teil der Bestätigungs-Bediengeste annimmt, in dem Betriebszustand in einer schematischen Draufsicht,
- Fig. 10: ein Diagramm eines Verfahrens mit der Haushaltsgerätevorrichtung in einer schematischen Darstellung,
- Fig. 11: eine alternative Markierungsbewegungs-Bediengeste in einer schematischen perspektivischen Darstellung,
- Fig. 12: einen ersten Teil einer alternativen Bestätigungs-Bediengeste in einer schematischen perspektivischen Darstellung,
- Fig. 13: einen zweiten Teil der alternativen Bestätigungs-Bediengeste in einer schematischen perspektivischen Darstellung,
- Fig. 14: eine alternative Markierungsbewegungs-Bediengeste in einer schematischen perspektivischen Darstellung,
- Fig. 15: einen ersten Teil einer alternativen Bestätigungs-Bediengeste in einer schematischen perspektivischen Darstellung und
- Fig. 16: einen zweiten Teil der alternativen Bestätigungs-Bediengeste in einer schematischen perspektivischen Darstellung.

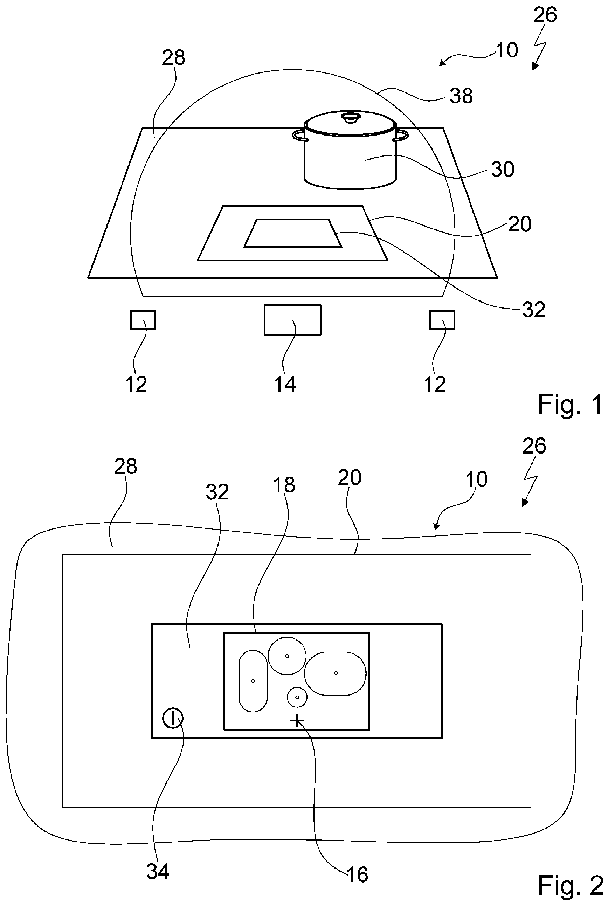

Fig. 1 zeigt ein Haushaltsgerät 26, das als ein Kochfeld ausgebildet ist, mit einer Haushaltsgerätevorrichtung 10, die als eine Kochfeldvorrichtung ausgebildet ist. Das Haushaltsgerät 26 ist als ein Induktionskochfeld ausgebildet. Die Haushaltsgerätevorrichtung 10 ist als eine Induktionskochfeldvorrichtung ausgebildet.

Die Haushaltsgerätevorrichtung 10 weist eine Haushaltsgeräteplatte 28 auf. Die Haushaltsgeräteplatte 28 ist als eine Kochfeldplatte ausgebildet. In einem montierten Zustand bildet die Haushaltsgeräteplatte 28 einen Teil eines Haushaltsgerätegehäuses, insbesondere eines Kochfeldaußengehäuses, aus. Die Haushaltsgeräteplatte 28 ist zu einem Aufstellen von Gargeschirr 30 vorgesehen.

Die Haushaltsgerätevorrichtung 10 weist mehrere Heizeinheiten (nicht dargestellt) auf. Die Heizeinheiten sind als Induktionsheizeinheiten ausgebildet. Die Heizeinheiten sind in Form einer Matrix angeordnet. Alternativ könnten die Heizeinheiten insbesondere Teil eines klassischen Kochfelds sein, bei welchem insbesondere durch eine Position der Heizeinheiten definierte, fest vorgegebene Heizzonen existieren könnten, welche insbesondere auf der Kochfeldplatte markiert sein könnten. Die Heizeinheiten sind dazu vorgesehen, auf der Haushaltsgeräteplatte 28 oberhalb der Heizeinheiten aufgestelltes Gargeschirr 30 zu erhitzen.

Die Haushaltsgerätevorrichtung 10 weist eine Bedienerschnittstelle 32 zu einer Eingabe und/oder Auswahl von Betriebsparametern auf, beispielsweise einer Heizleistung und/oder einer Heizleistungsdichte und/oder einer Heizzone. Die Bedienerschnittstelle 32 weist zumindest ein Bedienelement (nicht dargestellt) zu der Eingabe und/oder Auswahl von Betriebsparametern auf. Im vorliegenden Ausführungsbeispiel weist die Bedienerschnittstelle 32 mehrere Bedienelemente auf. Die Bedienerschnittstelle 32 weist einen Hauptschalter 34 auf. Der Hauptschalter 34 ist zu einer Aktivierung eines Betriebszustands vorgesehen.

Die Haushaltsgerätevorrichtung 10 weist eine Anzeigefläche 18 auf. Die Anzeigefläche 18 ist Teil der Bedienerschnittstelle 32. Die Bedienerschnittstelle 32 ist zu einer Ausgabe eines Werts eines Betriebsparameters an einen Bediener vorgesehen.

Die Haushaltsgerätevorrichtung 10 weist eine Steuereinheit 14 auf. Die Steuereinheit 14 ist dazu vorgesehen, in Abhängigkeit von mittels der Bedienerschnittstelle 32 eingegebenen Betriebsparametern Aktionen auszuführen und/oder Einstellungen zu verändern. Die Steuereinheit 14 regelt in dem Betriebszustand eine Energiezufuhr zu den Heizeinheiten. In einer Einbaulage ist die Steuereinheit 14 unterhalb der Haushaltsgeräteplatte 28 angeordnet.

Die Haushaltsgerätevorrichtung 10 weist eine Sensoreinheit 12 auf. In der Einbaulage ist die Sensoreinheit 12 unterhalb der Haushaltsgeräteplatte 28 angeordnet. Die Sensoreinheit 12 weist einen Detektionsbereich 38 auf (vgl. Fig. 1). Der Detektionsbereich 38 erstreckt sich in der Einbaulage bezüglich einer Vertikalrichtung oberhalb der Sensoreinheit 12. In dem Betriebszustand detektiert die Sensoreinheit 12 eine Vielzahl an Signalen. Die Sensoreinheit 12 übermittelt detektierte Signale an die Steuereinheit 14.

Die Sensoreinheit 12 ist dazu vorgesehen, in dem Betriebszustand Bediengesten eines Bedieners zu detektieren. Die Sensoreinheit 12 detektiert in dem Betriebszustand in dem Detektionsbereich 38 vorgenommene Bediengesten. In dem Betriebszustand übermittelt die Sensoreinheit 12 detektierte Bediengesten an die Steuereinheit 14. Die Steuereinheit 14 ist dazu vorgesehen, in dem Betriebszustand auf Basis der durch die Sensoreinheit 12 detektierten Bediengesten Aktionen auszuführen und/oder einzuleiten.

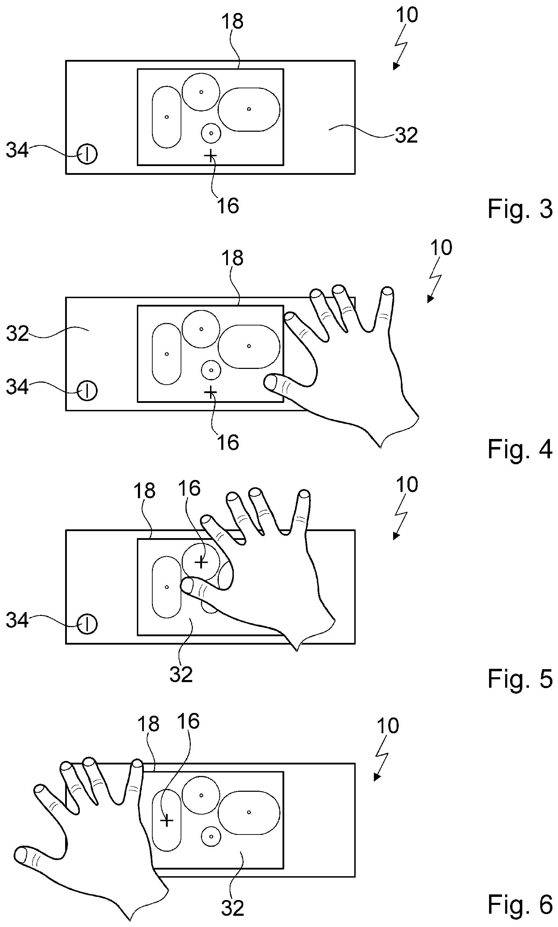

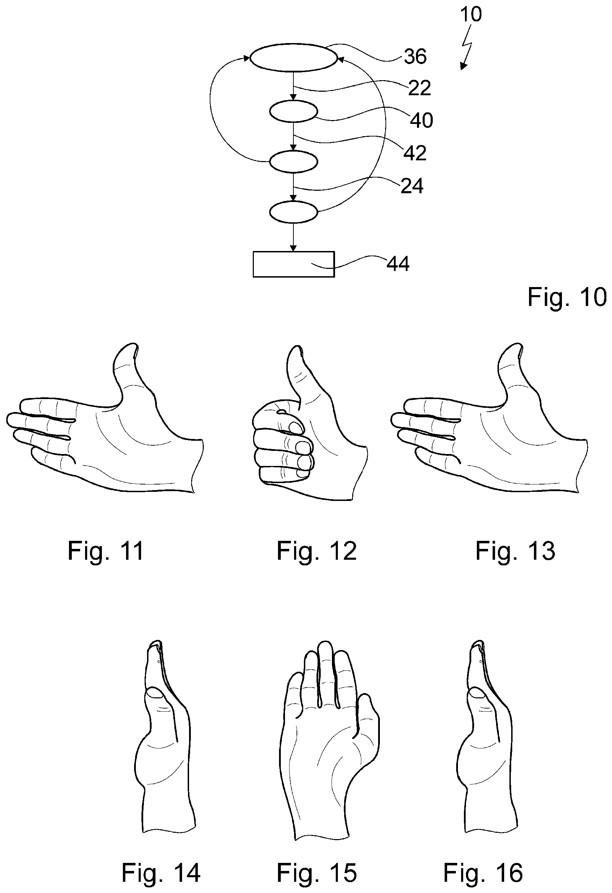

In einem Verfahren mit der Haushaltsgerätevorrichtung 10 startet die Steuereinheit 14 in dem Betriebszustand im Anschluss an eine Betätigung des Hauptschalters 34 einen Ausgangszustand 36 (vgl. Fig. 3 und 10). In dem Ausgangszustand 36 wartet die Steuereinheit 14 in dem Betriebszustand auf von der Sensoreinheit 12 detektierte Bediengesten.

Die Steuereinheit 14 weist eine Speichereinheit (nicht dargestellt) auf. In der Speichereinheit ist ein Bedienbereich 20 gespeichert (vgl. Fig. 1 und 2). In dem Betriebszustand berücksichtigt die Steuereinheit 14 ausschließlich in dem Bedienbereich 20 vorgenommene Bediengesten. Der Bedienbereich 20 ist kleiner als der Detektionsbereich 38. Die Steuereinheit 14 ignoriert in dem Betriebszustand außerhalb des Bedienbereichs 20 vorgenommene Bediengesten.

In dem Betriebszustand führt die Steuereinheit 14 eine Verifikations-Routine durch, um eine Möglichkeit einer Fehlbedienung zu reduzieren. Die Steuereinheit 14 führt die Verifikations-Routine innerhalb einer Verifikations-Zeitspanne 22 durch (vgl. Fig. 10). Die Verifikations-Zeitspanne 22 ist in der Speichereinheit der Steuereinheit 14 gespeichert. Die Verifikations-Zeitspanne 22 weist im vorliegenden Ausführungsbeispiel eine vordefinierte Dauer auf.

In dem Betriebszustand berücksichtigt die Steuereinheit 14 eine Bediengeste ausschließlich in Abhängigkeit einer zuvor erkannten Verifikations-Bediengeste (vgl. Fig. 4). Im vorliegenden Ausführungsbeispiel ist die Verifikations-Bediengeste eine offene Hand, welche im Wesentlichen parallel zu der Anzeigefläche 18 ausgerichtet ist. Die Steuereinheit 14 berücksichtigt in dem Betriebszustand eine Bediengeste ausschließlich in Abhängigkeit einer zuvor erkannten und über die vordefinierte Verifikations-Zeitspanne 22 gehaltenen Verifikations-Bediengeste.

In Abhängigkeit einer lediglich über einen Teil der vordefinierten Verifikations-Zeitspanne 22 gehaltenen Verifikations-Bediengeste ignoriert die Steuereinheit 14 in dem Betriebszustand nachfolgende Bediengesten. Die Steuereinheit 14 kehrt in dem Betriebszustand in Abhängigkeit einer lediglich über einen Teil der vordefinierten Verifikations-Zeitspanne 22 gehaltenen Verifikations-Bediengeste in den Ausgangszustand 36 zurück.

In dem Betriebszustand geht die Steuereinheit 14 in Abhängigkeit einer über die vordefinierte Verifikations-Zeitspanne 22 gehaltenen Verifikations-Bediengeste in einen Startzustand 40 über (vgl. Fig. 10). In dem Startzustand 40 wartet die Steuereinheit 14 in dem Betriebszustand innerhalb einer Bedieneingabe-Zeitspanne 42 auf eine Bediengeste. Die Bedieneingabe-Zeitspanne 42 weist im vorliegenden Ausführungsbeispiel eine unbegrenzte Dauer auf.

Die Steuereinheit 14 bewegt in dem Betriebszustand in Abhängigkeit von einer Markierungsbewegungs-Bediengeste eine Markierung 16 über die Anzeigefläche 18 (vgl. Fig. 5 bis 7). Im vorliegenden Ausführungsbeispiel sind auf der Anzeigefläche 18 mehrere Heizzonen dargestellt. In dem Betriebszustand markiert die Steuereinheit 14 mittels der Markierung 16 in Abhängigkeit von vordefinierten Markierungsbewegungs-Bediengesten verschiedene der Heizzonen.

In dem Betriebszustand bewegt die Steuereinheit 14 die Markierung 16 ausschließlich in Abhängigkeit von vordefinierten Markierungsbewegungs-Bediengesten über die Anzeigefläche 18. Die Markierungsbewegungs-Bediengesten sind in der Speichereinheit der Steuereinheit 14 gespeichert. Eine der Markierungsbewegungs-Bediengesten ist im vorliegenden Ausführungsbeispiel eine offene Hand, welche im Wesentlichen parallel zu der Anzeigefläche 18 ausgerichtet ist.

Eine alternative weitere Markierungsbewegungs-Bediengeste könnte beispielsweise eine geschlossene Hand mit abgespreiztem Daumen sein (vgl. Fig. 11). Der Daumen könnte insbesondere wenigstens im Wesentlichen senkrecht zu einer jeweiligen Längserstreckungsrichtung der weiteren Finger und insbesondere wenigstens im Wesentlichen parallel zu einer Haupterstreckungsebene der Handfläche ausgerichtet sein.

Eine alternative weitere Markierungsbewegungs-Bediengeste könnte beispielsweise eine geschlossene Hand mit anliegendem Daumen sein, welche wenigstens im Wesentlichen senkrecht zu der Anzeigefläche ausgerichtet sein könnte (vgl. Fig. 14).

Die Steuereinheit 14 trifft in dem Betriebszustand in Abhängigkeit einer Position der Markierung 16 eine Vorauswahl. In Fig. 5 bis 7 ist jeweils eine andere Heizzone vorausgewählt. Die Steuereinheit 14 ordnet in dem Betriebszustand einer mittels der Position der Markierung 16 markierten Heizzone einen Status als Vorauswahl zu.

In Abhängigkeit einer getroffenen Vorauswahl wartet die Steuereinheit 14 in dem Betriebszustand auf eine erneute Markierungsbewegungs-Bediengeste oder auf eine Bestätigungs-Bediengeste. Die Bestätigungs-Bediengeste ist zu einer Bestätigung einer getroffenen Vorauswahl vorgesehen.

Die Steuereinheit 14 bewegt in dem Betriebszustand in Abhängigkeit von einer erneuten Markierungsbewegungs-Bediengeste die Markierung 16 über die Anzeigefläche 18. In Abhängigkeit von einer erneuten Markierungsbewegungs-Bediengeste bewegt die Steuereinheit 14 die Markierung 16 an eine weitere Position. Die Steuereinheit 14 trifft in dem Betriebszustand in Abhängigkeit der weiteren Position der Markierung 16 eine weitere Vorauswahl. Diese Vorgehensweise ist in Fig. 5 bis 7 veranschaulicht.

In dem Betriebszustand nimmt die Steuereinheit 14 in Abhängigkeit von Bestätigungs-Bediengesten eine getroffene Vorauswahl an. In dem Betriebszustand nimmt die Steuereinheit 14 die getroffene Vorauswahl ausschließlich in Abhängigkeit von vordefinierten Bestätigungs-Bediengesten an. Die Bestätigungs-Bediengesten sind in der Speichereinheit der Steuereinheit 14 gespeichert. Im vorliegenden Ausführungsbeispiel ist eine der Bestätigungs-Bediengesten zweiteilig ausgebildet. In der Speichereinheit der Steuereinheit 14 sind zusätzlich einteilige Bestätigungs-Bediengesten und weitere zweiteilige Bestätigungs-Bediengesten gespeichert.

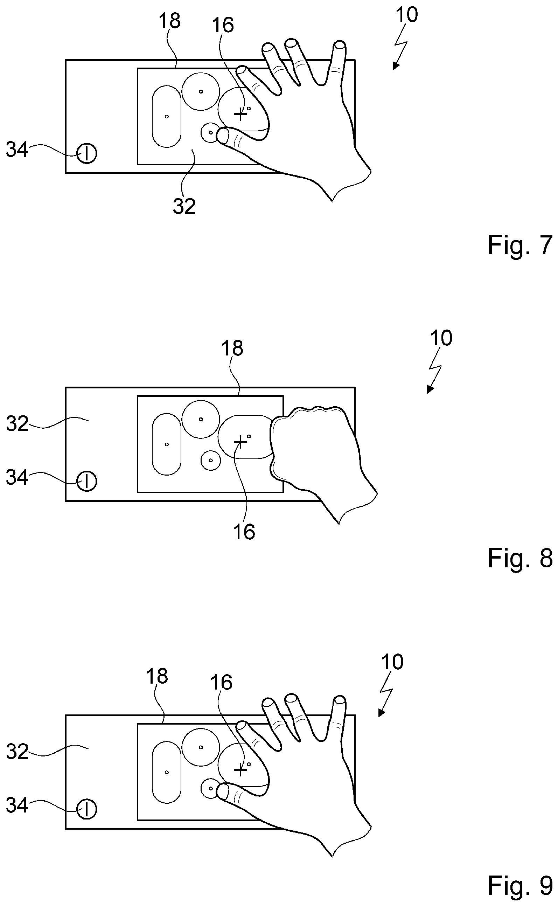

Die Steuereinheit 14 startet in Abhängigkeit von einem ersten Teil der Bestätigungs-Bediengeste eine Bestätigungs-Zeitspanne 24 (vgl. Fig. 10). Der erste Teil der Bestätigungs-Bediengeste ist im vorliegenden Ausführungsbeispiel eine geschlossene Faust (vgl. Fig. 8). Eine Handfläche ist im Fall des ersten Teils der Bestätigungs-Bediengeste im Wesentlichen parallel zu der Anzeigefläche 18 ausgerichtet. Alle Finger einer Hand des Bedieners sind im Fall des ersten Teils der Bestätigungs-Bediengeste insbesondere maximal gebeugt und bilden im vorliegenden Ausführungsbeispiel die Faust aus.

In dem Betriebszustand nimmt die Steuereinheit 14 die getroffene Vorauswahl ausschließlich in Abhängigkeit von vordefinierten und innerhalb der vordefinierten Bestätigungs-Zeitspanne 24 durchgeführten Bestätigungs-Bediengesten an. Die Steuereinheit 14 nimmt die getroffene Vorauswahl ausschließlich in Abhängigkeit von vordefinierten und innerhalb der vordefinierten Bestätigungs-Zeitspanne 24 vollständig abgeschlossenen Bestätigungs-Bediengesten an. Im vorliegenden Ausführungsbeispiel nimmt die Steuereinheit 14 die getroffene Vorauswahl ausschließlich in Abhängigkeit des ersten Teils der Bestätigungs-Bediengeste und eines zweiten Teils der Bestätigungs-Bediengeste an (vgl. Fig. 8 und 9).

Der zweite Teil der Bestätigungs-Bediengeste ist im vorliegenden Ausführungsbeispiel eine offene Hand, welche im Wesentlichen parallel zu der Anzeigefläche 18 ausgerichtet ist (vgl. Fig. 9).

Eine alternative weitere Bestätigungs-Bediengeste könnte beispielsweise einen ersten Teil und einen zweiten Teil aufweisen. Der erste Teil der weiteren Bestätigungs-Bediengeste könnte beispielsweise eine geschlossene Faust mit abgespreiztem Daumen sein (vgl. Fig. 12). Der zweite Teil der weiteren Bestätigungs-Bediengeste könnte eine geschlossene Hand mit abgespreiztem Daumen sein (vgl. Fig. 13). Der Daumen könnte insbesondere wenigstens im Wesentlichen senkrecht zu einer jeweiligen Längserstreckungsrichtung der weiteren Finger und insbesondere wenigstens im Wesentlichen parallel zu einer Haupterstreckungsebene der Handfläche ausgerichtet sein.

Eine alternative weitere Bestätigungs-Bediengeste könnte beispielsweise einen ersten Teil und einen zweiten Teil aufweisen. Der erste Teil der weiteren Bestätigungs-Bediengeste könnte beispielsweise eine geschlossene Hand mit anliegendem Daumen sein, welche wenigstens im Wesentlichen parallel zu der Anzeigefläche ausgerichtet sein könnte (vgl. Fig. 15). Der zweite Teil der weiteren Bestätigungs-Bediengeste könnte eine geschlossene Hand mit anliegendem Daumen sein, welche wenigstens im Wesentlichen senkrecht zu der Anzeigefläche ausgerichtet sein könnte (vgl. Fig. 16).

In Abhängigkeit von vordefinierten und innerhalb der vordefinierten Bestätigungs-Zeitspanne 24 durchgeführten Bestätigungs-Bediengesten startet die Steuereinheit 14 in dem Betriebszustand einen Ausführungszustand 44 (vgl. Fig. 10). In dem Ausführungszustand 44 führt die Steuereinheit 14 in dem Betriebszustand der angenommenen Vorauswahl zugeordnete Aktionen aus oder leitet der angenommenen Vorauswahl zugeordnete Aktionen ein.

In dem Betriebszustand geht die Steuereinheit 14 in Abhängigkeit von vordefinierten und innerhalb der vordefinierten Bestätigungs-Zeitspanne 24 unvollständig durchgeführten Bestätigungs-Bediengesten in den Ausgangszustand 36 zurück. In dem Ausgangszustand 36 ordnet die Steuereinheit 14 in dem Betriebszustand die Markierung 16 in einer Markierungs-Ausgangsposition an.

Die Steuereinheit 14 verändert in dem Betriebszustand eine Farbe der Markierung 16. In dem Betriebszustand verwendet die Steuereinheit 14 in Abhängigkeit von der Markierungsbewegungs-Bediengeste eine erste Farbe für die Markierung 16. Die erste Farbe ist im vorliegenden Ausführungsbeispiel schwarz. In Abhängigkeit von vordefinierten und innerhalb der vordefinierten Bestätigungs-Zeitspanne 24 durchgeführten Bestätigungs-Bediengesten verwendet die Steuereinheit 14 in dem Betriebszustand eine zweite sich von der ersten Farbe unterscheidende Farbe für die Markierung 16. Die zweite Farbe ist im vorliegenden Ausführungsbeispiel grün.

Die Steuereinheit 14 verändert in dem Betriebszustand eine Gestalt der Markierung 16 (vgl. Fig. 5 bis 7 und 9). In dem Betriebszustand verwendet die Steuereinheit 14 in Abhängigkeit von der Markierungsbewegungs-Bediengeste eine erste Gestalt für die Markierung 16 (vgl. Fig. 5 bis 7). Die erste Gestalt ist im vorliegenden Ausführungsbeispiel ein Kreuz. In Abhängigkeit von vordefinierten und innerhalb der vordefinierten Bestätigungs-Zeitspanne 24 durchgeführten Bestätigungs-Bediengesten verwendet die Steuereinheit 14 in dem Betriebszustand eine zweite sich von der ersten Gestalt unterscheidende Gestalt für die Markierung 16 (vgl. Fig. 9). Die zweite Gestalt ist im vorliegenden Ausführungsbeispiel ein Haken.

In dem Verfahren mit der Haushaltsgerätevorrichtung 10 werden in dem Betriebszustand Bediengesten eines Bedieners detektiert. In dem Betriebszustand wird auf Basis der detektierten Bediengesten wenigstens eine Aktion ausgeführt und/oder eingeleitet. In dem Betriebszustand wird in Abhängigkeit von Markierungsbewegungs-Bediengesten die Markierung 16 über die Anzeigefläche 18 bewegt. In Abhängigkeit von Bestätigungs-Bediengesten wird in dem Betriebszustand eine getroffene Vorauswahl angenommen.

### Bezugszeichen

- 10: Haushaltsgerätevorrichtung
- 12: Sensoreinheit
- 14: Steuereinheit
- 16: Markierung
- 18: Anzeigefläche
- 20: Bedienbereich
- 22: Verifikations-Zeitspanne
- 24: Bestätigungs-Zeitspanne
- 26: Haushaltsgerät
- 28: Haushaltsgeräteplatte
- 30: Gargeschirr
- 32: Bedienerschnittstelle
- 34: Hauptschalter
- 36: Ausgangszustand
- 38: Detektionsbereich
- 40: Startzustand
- 42: Bedieneingabe-Zeitspanne
- 44: Ausführungszustand

## Patentansprüche

1. Haushaltsgerät mit zumindest einer Haushaltsgerätevorrichtung (10) mit einer Sensoreinheit (12), die dazu vorgesehen ist, in wenigstens einem Betriebszustand wenigstens eine Bediengeste eines Bedieners zu detektieren, und mit einer Steuereinheit (14), die dazu vorgesehen ist, in dem Betriebszustand auf Basis der durch die Sensoreinheit (12) detektierten Bediengeste wenigstens eine Aktion auszuführen und/oder einzuleiten, wobei die Steuereinheit (14) die von der Sensoreinheit (12) detektierte Bediengeste auswertet und die detektierte Bediengeste mit in einer Speichereinheit der Steuereinheit (14) gespeicherten Bediengesten vergleicht und der Aktion zuordnet, welche die Steuereinheit (14) anschließend ausführt und/oder einleitet, wobei die Steuereinheit (14) dazu vorgesehen ist, in dem Betriebszustand zumindest eine Verifikations-Routine durchzuführen, um eine Möglichkeit einer Fehlbedienung zu reduzieren, bei der Verifikations-Routine eine Größe und/oder Form eines Körperteils eines Bedieners zu berücksichtigen, um eine von einer unautorisierten Person vorgenommene Bediengeste zu erkennen, und eine Bediengeste ausschließlich in Abhängigkeit einer zuvor erkannten Verifikations-Bediengeste zu berücksichtigen, welche sich von einer Fehlbedienung unterscheidet und in Abhängigkeit welcher die Steuereinheit (14) einen Bedienmodus einleitet und/oder startet, wobei die Steuereinheit (14) dazu vorgesehen ist, in dem Betriebszustand bei einer gültigen Verifikations-Bediengeste in Abhängigkeit von zumindest einer Markierungsbewegungs-Bediengeste zumindest eine Markierung (16) über zumindest eine Anzeigefläche (18) zu bewegen.

2. Haushaltsgerät nach Anspruch 1, **dadurch gekennzeichnet, dass** die Steuereinheit (14) dazu vorgesehen ist, in dem Betriebszustand die Markierung (16) ausschließlich in Abhängigkeit von vordefinierten Markierungsbewegungs-Bediengesten über die Anzeigefläche (18) zu bewegen.

3. Haushaltsgerät nach einem der vorhergehenden Ansprüche, **dadurch gekennzeichnet, dass** die Steuereinheit (14) dazu vorgesehen ist, in dem Betriebszustand ausschließlich in einem Bedienbereich (20) vorgenommene Bediengesten zu berücksichtigen.

4. Haushaltsgerät nach einem der vorhergehenden Ansprüche, **dadurch gekennzeichnet, dass** die Steuereinheit (14) dazu vorgesehen ist, in dem Betriebszustand eine Bediengeste ausschließlich in Abhängigkeit einer zuvor erkannten und über eine vordefinierte Verifikations-Zeitspanne (22) gehaltenen Verifikations-Bediengeste zu berücksichtigen.

5. Haushaltsgerät nach einem der vorhergehenden Ansprüche, **dadurch gekennzeichnet, dass** die Steuereinheit (14) dazu vorgesehen ist, in dem Betriebszustand in Abhängigkeit einer Position der Markierung (16) eine Vorauswahl zu treffen.

6. Haushaltsgerät nach einem der vorhergehenden Ansprüche, **dadurch gekennzeichnet, dass** die Steuereinheit (14) dazu vorgesehen ist, in dem Betriebszustand in Abhängigkeit von zumindest einer Bestätigungs-Bediengeste zumindest eine Vorauswahl anzunehmen.

7. Haushaltsgerät nach Anspruch 6, **dadurch gekennzeichnet, dass** die Steuereinheit (14) dazu vorgesehen ist, in dem Betriebszustand die Vorauswahl ausschließlich in Abhängigkeit von vordefinierten Bestätigungs-Bediengesten anzunehmen.

8. Haushaltsgerät nach Anspruch 7, **dadurch gekennzeichnet, dass** die Steuereinheit (14) dazu vorgesehen ist, in dem Betriebszustand die Vorauswahl ausschließlich in Abhängigkeit von vordefinierten und innerhalb einer vordefinierten Bestätigungs-Zeitspanne (24) durchgeführten Bestätigungs-Bediengesten anzunehmen.

9. Haushaltsgerät nach einem der vorhergehenden Ansprüche, **dadurch gekennzeichnet, dass** die Steuereinheit (14) dazu vorgesehen ist, in dem Betriebszustand eine Gestalt und/oder eine Farbe der Markierung (16) zu verändern.

10. Verfahren mit einem Haushaltsgerät , insbesondere nach einem der Ansprüche 1 bis 9, bei dem in wenigstens einem Betriebszustand wenigstens eine Bediengeste eines Bedieners detektiert und in dem Betriebszustand auf Basis der detektierten Bediengeste wenigstens eine Aktion ausgeführt und/oder eingeleitet wird, wobei die detektierte Bediengeste von einer Steuereinheit (14) ausgewertet wird und die detektierte Bediengeste mit in einer Speichereinheit der Steuereinheit (14) gespeicherten Bediengesten verglichen und der Aktion zuordnet wird, welche die Steuereinheit (14) anschließend ausführt und/oder einleitet, wobei in dem Betriebszustand durch die Steuereinheit (14) zumindest eine Verifikations-Routine durchgeführt wird, wodurch eine Möglichkeit einer Fehlbedienung reduziert wird, wobei bei der Verifikations-Routine eine Größe und/oder Form eines Körperteils eines Bedieners berücksichtigt wird, eine von einer unautorisierten Person vorgenommene Bediengeste erkannt wird und eine Bediengeste ausschließlich in Abhängigkeit einer zuvor erkannten Verifikations-Bediengeste berücksichtigt wird, welche sich von einer Fehlbedienung unterscheidet und in Abhängigkeit welcher durch die Steuereinheit (14) ein Bedienmodus eingeleitet und/oder gestartet wird, wobei die Steuereinheit (14) in dem Betriebszustand bei einer gültigen Verifikations-Bediengeste in Abhängigkeit von zumindest einer Markierungsbewegungs-Bediengeste zumindest eine Markierung (16) durch die Steuereinheit (14) über zumindest eine Anzeigefläche (18) bewegt wird.

## Claims

1. Household appliance with at least one household appliance device (10) with a sensor unit (12), which is provided, in at least one operating state, to detect at least one operating gesture of an operator, and with a control unit (14) which is provided, in the operating state, to perform and/or initiate at least one action on the basis of the operating gesture detected by the sensor unit (12), wherein the control unit (14) evaluates the operating gesture detected by the sensor unit (12) and compares the detected operating gesture with operating gestures stored in a storage unit of the control unit (14), and assigns the same to the action, which the control unit (14) then performs and/or initiates, wherein the control unit (14) is provided, in the operating state, to carry out at least one verification routine in order to reduce a possibility of an operating error, to take into account a size and/or shape of a body part of an operator during the verification routine in order to identify an operating gesture performed by an unauthorized person and to take into account an operating gesture exclusively as a function of a previously identified verification operating gesture which differs from an operating error and as a function of which the control unit (14) initiates and/or starts an operating mode, wherein the control unit (14) is provided, in the operating state, to move at least one marker (16) over at least one display surface (18) with a valid verification operating gesture as a function of at least one marker movement operating gesture.

2. Household appliance according to claim 1, **characterised in that** the control unit (14) is provided, in the operating state, to move the marker (16) over the display surface (18) exclusively as a function of predefined marker movement operating gestures.

3. Household appliance according to one of the preceding claims, **characterised in that** the control unit (14) is provided, in the operating state, to take into account operating gestures performed exclusively in an operating region (20).

4. Household appliance according to one of the preceding claims, **characterised in that** the control unit (14) is provided, in the operating state, to take into account an operating gesture exclusively as a function of a previously identified verification operating gesture which is maintained over a predefined verification time interval (22).

5. Household appliance according to one of the preceding claims, **characterised in that** the control unit (14) is provided, in the operating state, to make a preselection as a function of a position of the marker (16).

6. Household appliance according to one of the preceding claims, **characterised in that** the control unit (14) is provided, in the operating state, to assume at least one preselection as a function of at least one confirmation operating gesture.

7. Household appliance according to claim 6, **characterised in that** the control unit (14) is provided, in the operating state, to assume the preselection exclusively as a function of predefined confirmation operating gestures.

8. Household appliance according to claim 7, **characterised in that** the control unit (14) is provided, in the operating state, to assume the preselection exclusively as a function of predefined confirmation operating gestures which are performed within a predefined confirmation time interval (24).

9. Household appliance according to one of the preceding claims, **characterised in that** the control unit (14) is provided, in the operating state, to change a shape and/or a colour of the marker (16).

10. Method with a household appliance, in particular according to one of claims 1 to 9, in which, in at least one operating state, at least one operating gesture of an operator is detected and in the operating state at least one action is performed and/or initiated on the basis of the detected operating gesture, wherein the detected operating gesture is evaluated by a control unit (14) and the detected operating gesture is compared with operating gestures stored in a storage unit of the control unit (14) and is assigned to the action which the control unit (14) then performs and/or initiates, wherein in the operating state at least one verification routine is carried out by the control unit (14), as a result of which a possibility of an operating error is reduced, wherein during the verification routine, a size and/or shape of a body part of an operator is taken into account, an operating gesture performed by an unauthorized person is identified and an operating gesture is taken into account exclusively as a function of a previously identified verification operating gesture, which differs from an operating error and as a function of which an operating mode is initiated and/or started by the control unit (14), wherein in the operating state with a valid verification operating gesture the control unit (14) at least one marker (16) is moved over at least one display surface (18) by means of the control unit (14) as a function of at least one marker movement operating gesture.

## Revendications

1. Appareil électroménager comprenant au moins un dispositif d'appareil électroménager (10) comprenant une unité de détection (12), qui est configurée pour détecter, dans au moins un état de fonctionnement, au moins un geste de commande d'un utilisateur, et au moins une unité de commande (14), qui est configurée pour exécuter et/ou déclencher au moins une action dans l'état de fonctionnement en fonction du geste de commande détecté par l'unité de détection (12),
dans lequel l'unité de commande (14) analyse le geste de commande détecté par l'unité de détection (12) et compare le geste de commande détecté avec des gestes de commande enregistrés dans une unité de mémoire de l'unité de commande (14) et l'associe à une action correspondante, que l'unité de commande (14) exécute et/ou déclenche ensuite,
dans lequel l'unité de commande (14) est configurée pour exécuter au moins une routine de vérification dans l'état de fonctionnement afin de réduire la possibilité d'une fausse manipulation, pour prendre en compte, lors de la routine de vérification, une taille et/ou une forme d'une partie du corps d'un utilisateur, afin d'identifier un geste de commande effectué par une personne non autorisée et pour prendre en compte un geste de commande uniquement lorsqu'un geste de commande de vérification a été préalablement identifié, qui se différencie d'une fausse manipulation et en fonction duquel l'unité de commande (14) déclenche et/ou démarre un mode de commande, dans lequel l'unité de commande (14) est configurée pour, dans l'état de fonctionnement, dans le cas d'un geste de commande de vérification valide, déplacer au moins un marqueur (16) sur au moins une surface d'affichage (18) en fonction d'au moins un geste de commande de déplacement du marqueur.

2. Appareil électroménager selon la revendication 1, **caractérisé en ce que** l'unité de commande (14) est configurée pour déplacer, dans l'état de fonctionnement, le marqueur (16) sur la surface d'affichage (18) uniquement en fonction de gestes de commande de déplacement du marqueur prédéfinis.

3. Appareil électroménager selon l'une des revendications précédentes, **caractérisé en ce que** l'unité de commande (14) est configurée pour ne prendre en compte, dans l'état de fonctionnement, que des gestes de commande effectués à l'intérieur d'une zone de commande (20).

4. Appareil électroménager selon l'une des revendications précédentes, **caractérisé en ce que** l'unité de commande (14) est configurée pour ne prendre en compte, dans l'état de fonctionnement, un geste de commande qu'après identification préalable d'un geste de commande de vérification maintenu pendant un intervalle de temps de vérification prédéfini (22).

5. Appareil électroménager selon l'une des revendications précédentes, **caractérisé en ce que** l'unité de commande (14) est configurée pour effectuer une présélection dans l'état de fonctionnement en fonction de la position du marqueur (16).

6. Appareil électroménager selon l'une des revendications précédentes, **caractérisé en ce que** l'unité de commande (14) est configurée pour valider au moins une présélection dans l'état de fonctionnement en fonction d'au moins un geste de commande de confirmation.

7. Appareil électroménager selon la revendication 6, **caractérisé en ce que** l'unité de commande (14) est configurée pour ne valider la présélection dans l'état de fonctionnement qu'en fonction de gestes de commande de confirmation prédéfinis.

8. Appareil électroménager selon la revendication 7, **caractérisé en ce que** l'unité de commande (14) est configurée pour ne valider la présélection dans l'état de fonctionnement qu'en fonction de gestes de commande de confirmation prédéfinis et exécutés dans un intervalle de temps de confirmation prédéfini (24).

9. Appareil électroménager selon l'une des revendications précédentes, **caractérisé en ce que** l'unité de commande (14) est configurée pour modifier dans l'état de fonctionnement une forme et/ou une couleur du marqueur (16).

10. Procédé mis en œuvre au moyen d'un appareil électroménager, notamment selon l'une des revendications 1 à 9, dans lequel, dans au moins un état de fonctionnement, au moins un geste de commande d'un utilisateur est détecté, et au moins une action est exécutée et/ou déclenchée dans l'état de fonctionnement en fonction du geste de commande détecté,
dans lequel le geste de commande détecté est analysé par une unité de commande (14) et le geste de commande détecté est comparé avec des gestes de commande enregistrés dans une unité de mémoire de l'unité de commande (14) et une action correspondante est attribuée au geste détecté, que l'unité de commande (14) exécute et/ou déclenche ensuite,
dans lequel, dans l'état de fonctionnement, au moins une routine de vérification est exécutée par l'unité de commande (14), permettant de réduire le risque d'une fausse manipulation,
dans lequel, lors de la routine de vérification, une taille et/ou une forme d'une partie du corps d'un utilisateur est prise en compte, un geste de commande effectué par une personne non autorisée est reconnu, et un geste de commande n'est pris en compte que lorsqu'un geste de commande de vérification, se distinguant d'une fausse manipulation, a été préalablement identifié, et en fonction duquel un mode de commande est déclenché et/ou démarré par l'unité de commande (14),
dans lequel, dans l'état de fonctionnement, lorsqu'un geste de commande de vérification valide est détecté, au moins un marqueur (16) est déplacé par l'unité de commande (14) sur au moins une surface d'affichage (18) en fonction d'au moins un geste de commande de déplacement du marqueur.
